**Europäisches Patentamt**

**European Patent Office**

**Office européen des brevets**

(19)

(11) Numéro de publication: **0 107 552**
**B1**

(12) **FASCICULE DE BREVET EUROPÉEN**

(45) Date de publication du fascicule du brevet:
08.06.88

(21) Numéro de dépôt: **83401942.4**

(22) Date de dépôt: **04.10.83**

(51) Int. Cl.⁴: **G 01 S 15/89,** G 01 S 15/02,
G 01 S 15/87, G 01 S 7/52,
**G 10 K 11/34**

(54) Sonar interférométrique en acoustique non-linéaire.

(30) Priorité: **12.10.82 FR 8217071**

(43) Date de publication de la demande:
**02.05.84 Bulletin 84/18**

(45) Mention de la délivrance du brevet:
**08.06.88 Bulletin 88/23**

(84) Etats contractants désignés:
**DE GB IT SE**

(56) Documents cité:
**EP-A-0 002 642**
**FR-A-2 214 132**
**US-A-3 613 069**
**US-A-3 716 824**
**US-A-3 786 405**
**US-A-3 824 531**
**US-A-4 081 783**

(73) Titulaire: **THOMSON- CSF, 173, Boulevard
Haussmann, F-75379 Paris Cédex 08 (FR)**

(72) Inventeur: **Grall, Georges, THOMSON- CSF SCPI
173, bld Haussmann, F-75379 Paris Cedex 08 (FR)**
Inventeur: **Peynaud, François, THOMSON- CSF
SCPI 173, bld Haussmann, F-75379 Paris Cedex 08
(FR)**

(74) Mandataire: **Desperrier, Jean- Louis, THOMSON-
CSF SCPI 19, avenue de Messine, F-75008 Paris
(FR)**

EP 0 107 552 B1

LIBER, STOCKHOLM 1988

## Description

L'objet de la présente invention est un sonar interférométrique utilisant les propriétés non-linéaires du milieu marin. En acoustique sous-marine la recherche d'objets sur le fond, tels que des mines, nécessite un sonar à haute résolution pour pouvoir identifier ces objets. Par ailleurs la recherche de mines se fait avantageusement à des fréquences de quelques dizaines de kHz, appelées basses fréquences, pour pouvoir repérer des mines enfouies. En effet, l'énergie acoustique ne pénètre de façon significative dans les sables et sédiments qu'à des fréquences n'excédant pas 30 kHz. De plus, les mines peuvent être revêtues de matériaux, appelés anéchoïques, absorbant les ondes acoustiques, mais ces matériaux ne sont très efficaces que pour les hautes frequences.

Le fait d'utiliser des basses fréquences avec une bonne résolution exige des antennes de dimensions importantes ou des antennes synthétiques, de technologie complexe.

Il est connu notamment par le document EP-A-0 002 642 de réaliser un sonar actif de haute résolution, ayant une antenne de réception comprenant un réseau d'hydrophones et une antenne d'émission comprenant deux transducteurs placés aux extrémités de l'antenne de réception. Pour couvrir correctement un secteur angulaire, l'émission des deux transducteurs d'extrémités se fait alternativement en phase ou en opposition de phase.

Il est connu par ailleurs, notamment du brevet US-A-3 786 405, d'émettre à deux fréquences hautes et de recevoir à la fréquence différence par suite des non-linéarités du milieu de propagation. Le sonar décrit dans ce brevet ne délivre qu'un faisceau sonore unique dont la direction est constante. L'exploration du fond sous-marin se fait par déplacement du bateau portant le sonar.

On connaît aussi du brevet français FR-A-2 214 132 un sonar utilisant ce système d'émission à deux hautes fréquences et de réception sur la basse fréquence correspondant à la différence de celles-ci, dit paramétrique, dans lequel ces hautes fréquences sont appliquées aux transducteurs multipies d'une antenne d'émission. En déphasant les signaux appliqués aux différents transducteurs, on oriente le faisceau résultant, selon une technique connue en elle-même. Le transducteur de réception est un hydrophone omnidirectionnel dont la bande passante est centrée sur la basse frequence.

Afin d'obtenir à la fois la pénétration dans le sol des ondes basse fréquence, la résolution en distance des ondes haute fréquence, et la résolution angulaire sans balayage des dispositifs d'interférométrie, l'invention propose de recevoir à la fois en haute fréquence (HF) et en basse fréquence (BF) les signaux d'un sonar interférométrique et paramétrique pour disposer simultanément des informations fournies à la fois par le sonar HF et par le sonar BF. Il est ainsi possible, par exemple, de présenter les deux images obtenues sur le même écran, ce qui, par corrélation visuelle, améliore le pouvoir de détection et diminue le taux de fausses alarmes.

Le sonar selon l'invention est défini par la revendication 1.

D'autres caractéristiques et avantages ressortiront de la description qui va suivre, illustrée par les figures qui représentent:
- figures 1, 2 et 3, les diagrammes d'émission, de réception et d'émission-réception d'un sonar interférométrique;
- figure 4, le schéma d'une antenne interférometrique d'émission;
- figure 5, un schéma explicatif pour l'émission non-linéaire;
- figure 6, un ensemble émission-réception;
- figure 7, des diagrammes d'émission et d'émission-réception pour les différentes voies formées;
- figure 8, le schéma d'un ensemble emission et reception en haute et basse fréquence suivant l'invention.

Il est connu que si deux sources rayonnent en synchronisme, le diagramme de rayonnenent $T_o(\theta)$ pour deux sources ponctuelles est donné par:

$$T_o(\theta) = \cos \left[ \tfrac{\pi L}{\lambda} \sin \theta \right] \tag{1}$$

où L est la distance des deux sources $\theta$ étant l'angle d'une direction avec la normale à la droite reliant ces deux sources et $\lambda$ la longueur d'onde, dans le milieu de propagation.

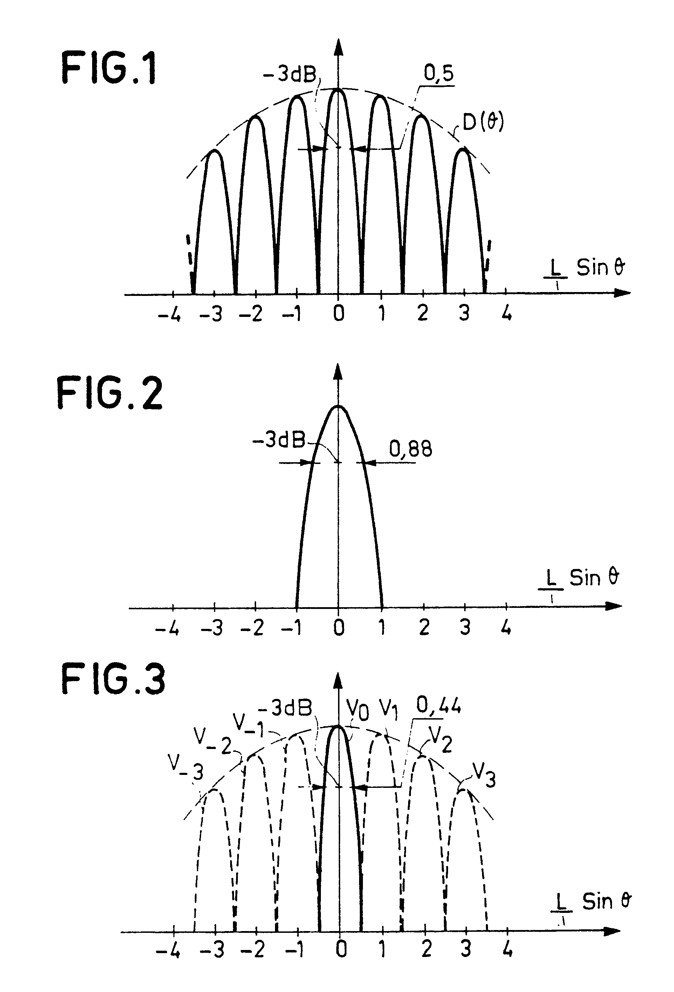

Pour des sources étendues, le diagramme $T(\theta)$ (figure 1) est donné par:

$$T(\theta) = T_o(\theta).D(\theta)$$

où $T_o(\theta)$ est donné par la relation (1) et $D(\theta)$ est le diagramme élémentaire de chacune des deux sources.

Pour une antenne de réception également de longueur L comportant des transducteurs considérés comme remplissant de façon continue cette longueur L, c'est à dire pratiquement avec un écart entre transducteurs, tel que $d \leqslant \lambda/2$, le diagramme de réception $R(\theta)$ est tel que:

$$R(\theta) = \frac{\sin \left[ \tfrac{\pi L}{\lambda} \sin \theta \right]}{\tfrac{\pi L}{\lambda} \sin \theta} \tag{2}$$

avec une largeur à 3 dB de $0,88\lambda/L$ comme le montre la figure 2, ou l'on a négligé les lobes secondaires.

Le diagramme émission-réception $T(\theta) \times R(\theta)$ est d'après les relations précédentes.

$$T(\theta) \times R(\theta) = \frac{\sin [2\pi L \sin \theta)/\lambda]}{(2\pi L \sin \theta)/\lambda} \times D(\theta) \qquad (3)$$

L'expression (3) montre que le diagramme global a une largeur deux fois plus faible à 3 dB, c'est à dire 0,44 $\lambda$/L, ce qui correspond suivant la relation (2) à un diagramme pour une longueur d'antenne de 2L.

Il est connu de traiter les signaux reçus par les transducteurs pour former m voies par compensation des retards géométriques correspondant aux m directions, repérées par des angles tel que $\theta_i$ avec i < m. Si les angles $\theta_i$ sont tels que $\sin\theta_i = K_i\lambda$/L où $K_i$ est une constante entière, les maxima pour les voies formées correspondent à ceux de la fonction $T_o(\theta)$ de la relation (1).

La figure 3 montre la voie centrale $V_0$ et les 6 voies $V_{-3}$, $V_{-2}$, $V_{-1}$, $V_1$, $V_2$ et $V_3$ centrées sur les valeurs de (L sin $\theta$)/$\lambda$ = -3, -2, -1, 1, 2 et 3.

Ces voies formées possédant des trous entre elles, on comble ces trous en faisant alternativement des emissions pour lesquelles les deux transducteurs sont en phase puis en opposition de phase. Dans ce dernier cas on obtient pour $T_o(\theta)$:

$$T_o(\theta) = \sin [(\pi L/\sin \theta)/\lambda] \qquad (4)$$

et m autres voies sont formées dans m directions repérées par les angles $\theta_i$ tels que $\sin \theta_i = (K_i +1/2)\lambda$/L. Ces voies s'intercalent entre les voies montrées par la figure 3.

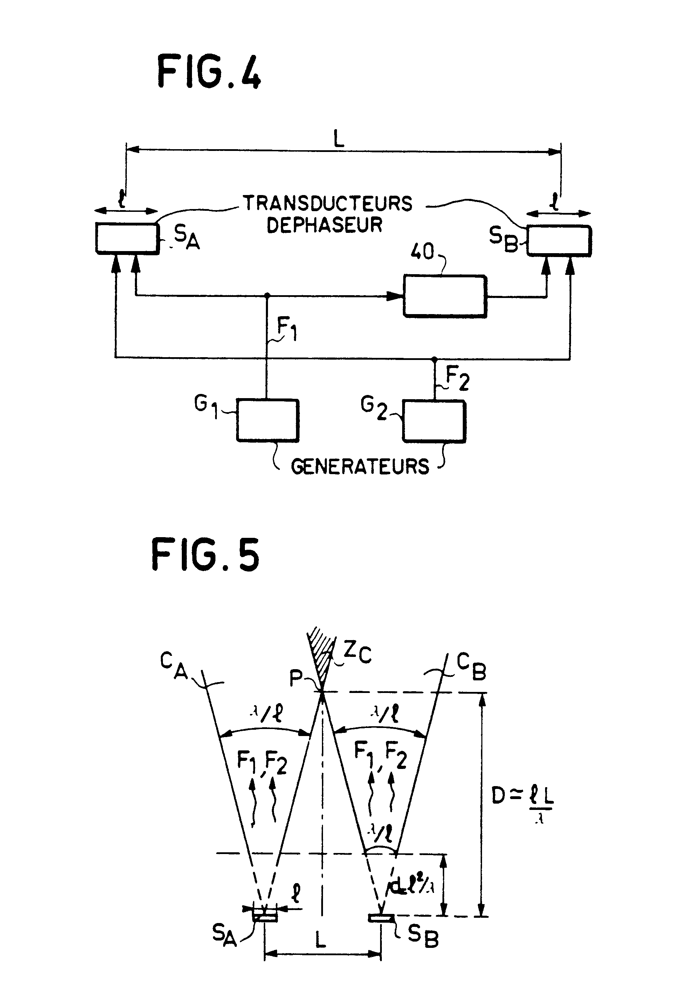

Une antenne démission, est montree par la figure 4. Les deux transducteurs d'émission $S_A$ et $S_B$ sont alimentés tous les deux simultanément par des signaux aux hautes fréquences (HF) $F_1$ et $F_2$, fournis par des générateurs $G_1$ et $G_2$. Au-delà de la zone de Fresnel les deux transducteurs émettent suivant des cônes $C_A$ et $C_B$, figure 5, d'ouverture angulaire $\lambda$/I dans le plan de la figure, où $\lambda$ est la longueur d'onde associée à la frequence moyenne $(F_1 + F_2)/2$ et I la longueur des deux transducteurs $S_A$ et $S_B$ distants de la longueur L.

Lorsqu'une onde acoustique est émise dans l'eau, les propriétés non-lineaires du milieu font que la célérité de cette onde dépend de l'amplitude instantanée de la pression sonore, la forme sinusoïdale de cette pression se déforme pour tendre vers une forme en dents de scie.

Il en résulte que si deux ondes sonores aux fréquences $F_1$ et $F_2$ dites primaires sont émises dans un même volume, elles interagissent pour donner tous les produits d'intermodulation, dont en particulier le signal à la fréquence $F_2 + F_1$ qui se trouve rapidement absorbé et le signal recherché à la fréquence $F_2 - F_1$.

L'antenne qui rayonne cette basse fréquence n'est donc pas l'antenne, mais tout le volume "insonifié" par les deux fréquences primaires. Cette antenne allongée, faite d'eau, rayonne sa basse fréquence dans le sens de la propagation des ondes primaire.

Il est connu que la zone de Fresnel s'étend pratiquement jusqu'à la distance d = $I^2/\lambda$ (5). Le point d'intersection des deux cônes $C_A$ et $C_B$ au point P est à la distance D = IL/$\lambda$ (6) et d'après les relations (5) et (6) D/d = L/I, d'où D/d ≫ I car L ≫ I et la zone $Z_C$ dans laquelle il y a interférence en haute fréquence est bien au-delà de la zone de Fresnel. Par conséquent, l'interaction non-linéaire génère dans l'eau, au niveau des 2 cônes d'émission $C_A$ et $C_B$, 2 sources basse fréquence $F_1 - F_2$ séparées de L, la zone d'interaction $Z_C$ étant suffisamment éloignée pour que son influence soit négligeable. Un calcul classique en acoustique non-linéaire montre en effet que la longueur du volume d'eau intercepté par les 2 cônes d'émission est suffisante pour générer les deux sources BF. On obtient ainsi un interféromètre basse fréquence à l'émission.

On forme m voies BF en réception sur l'antenne de longueur L et le produit émission-réception a un diagramme de rayonnement basse fréquence 2 fois plus directif que celui d'une antenne classique.

De même que pour l'interféromètre HF on doit pouvoir déphaser l'émission de $\pi$ pour former 2m-l voies dans tout un secteur angulaire. Sur la figure 4 on a représenté un déphaseur, 40, pour le signal à la fréquence $F_1$. On émet alternativement sans déphasage et avec déphasage de $\pi$ sur le signal à $F_1$. Notons que le déphasage de $\pi$ peut être appliqué indifféremment soit sur le signal à $F_1$, comme indiqué en exemple, soit sur le signal à $F_2$.

Suivant un exemple de réalisation d'un sonar de recherche d'objets immergés, à haute résolution, avec une émission interférométrique on a les caractéristiques suivantes:
- première haute fréquence, $F_1$ = 160 kHz;
- seconde haute fréquence, $F_2$ = 190 kHz;
- haute fréquence moyenne $(F_1 + F_2)/2$ = 175 kHz;
- longueur d'onde d'emission HF moyenne, $\lambda$ = 8,57 mm;
- distance entre les transducteurs d'émission = 171 $\lambda \approx$ 1,5 m;
- dimensions des transducteurs d'émission, longueur = 7$\lambda \approx$ 60 mm; hauteur = 4 $\lambda \approx$ 34 mm;
- fréquence de réception BF, $F_2 - F_1$ = 30 kHz;
-longueur d'onde de réception = 50 mm.

L'antenne de réception est une base d'hydrophone plane et sensible à la basse fréquence $F_1 - F_2$. Les signaux reçus sont traités de façon conventionnelle pour former des voies.

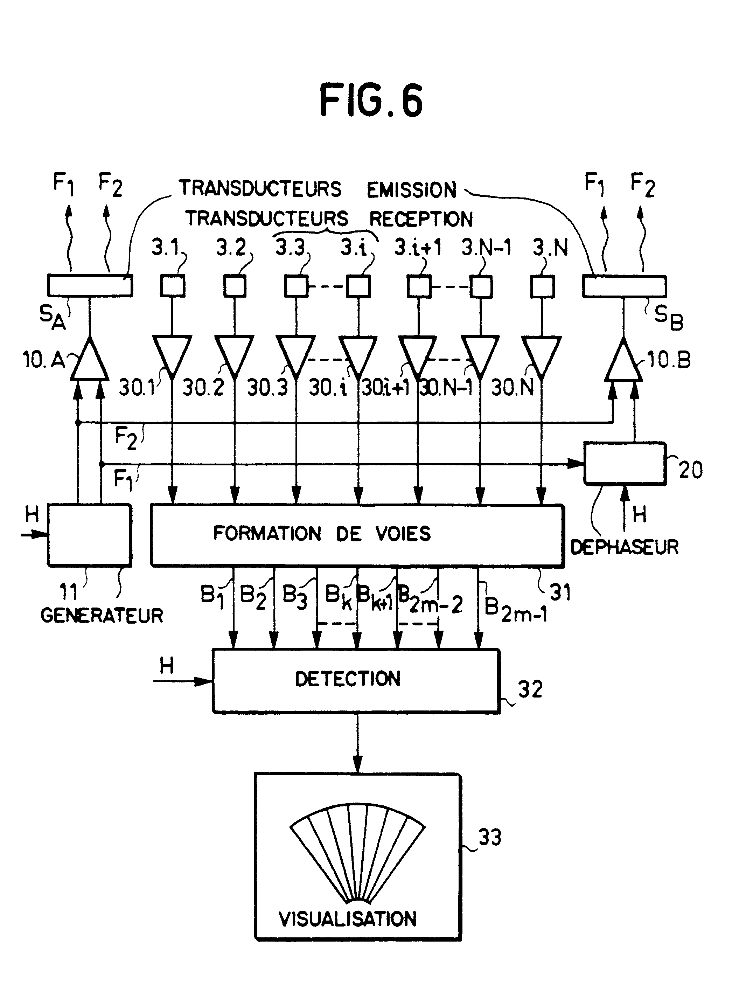

La figure 6 montre schématiquement cette realisation. L'émission se fait simultanément par les deux transducteurs d'extrémité $S_A$ et $S_B$ aux fréquences $F_1$ et $F_2$.

Pour la fréquence $F_2$ les signaux émis par les deux transducteurs sont constamment en phase. Par contre pour la frequence $F_1$ les signaux émis sont alternativement en phase et en opposition de phase, pour qu'il en soit de même pour les signaux générés à la fréquence différence $F_2 - F_1$.

Pendant chacune de ces séquences on forme m-1 voies, ce qui permet de surveiller un secteur angulaire sans trous.

Les signaux d'émission aux fréquences $F_1$ et $F_2$ sont fournis par les générateurs 11. Ces signaux sont amplifies par l'amplificateur 10.A et appliqués au transducteur $S_A$. Le signal correspondant à la fréquence $F_1$ est appliqué à un déphaseur 0 ou $\pi$ commandé par un signal d'horloge H. Le signal fourni par le déphaseur commandable 20 est appliqué ainsi que le signal à la fréquence $F_2$ à un amplificateur 10.B. Les signaux amplifiés sont appliqués au transducteur $S_B$.

Le déphasage de $\pi$ sur le signal émis à $F_1$ par le transducteur $S_B$ produit ce déphasage sur le signal basse fréquence, qui se trouve parmi les produits d'intermodulation, crées par le milieu non-linéaire, dans le cône d'eau situe devant $S_B$.

Les amplificateurs de puissance 10.A et 10.B de ces transducteurs permettent de délivrer une puissance supérieure au kilowatt par transducteur. Cette puissance se traduit par un niveau sonore HF de 125 dB par élément (réf. IV/1 $\mu$B). Les calculs classiques en acoustique non-linéaire montrent que le niveau sonore BF qui en résulte à 30 kHz sera de l'ordre de 95 dB. Les sources $S_A$ et $S_B$ se comportent donc comme deux projecteurs BF à 30 kHz délivrant un niveau sonore de 95 dB (réf. IV/1 $\mu$B).

L'antenne de réception comprend les N hydrophones 3.I,...3.i, ...3.N. Les signaux reçus à la fréquence $F_2 - F_1$ sont amplifiés par les amplificateurs 30.I, 30.i ... 30.N et les signaux amplifiés sont appliqués aux circuits de formation de voies 31.

La formation de voies se fait de façon connue par addition et déphasage ou retard des signaux et permet de former en parallèle plusieurs voies dans des directions d'écoute différentes.

Le déphasage 0 ou $\mu$ par le circuit 20 est commandé par une horloge H, qui commande également les circuits de formation de voies en basse fréquence. On forme ainsi les voies $B_1$, $B_3$ pendant une séquence et les voies $B_2$, $B_4$, pendant l'autre séquence, correspondant au déphasage $\pi$.

Ces voies sont ensuite détectées et multiplexées de façon connue par le circuit 32 et les signaux fournis sont appliqués à un ensemble de visualisation 33.

A titre d'exemple on prend N = 7 hydrophones espacés de 3,5 $\lambda$, où $\lambda$ est la longueur d'onde correspondante à la basse fréquence 30 kHz.

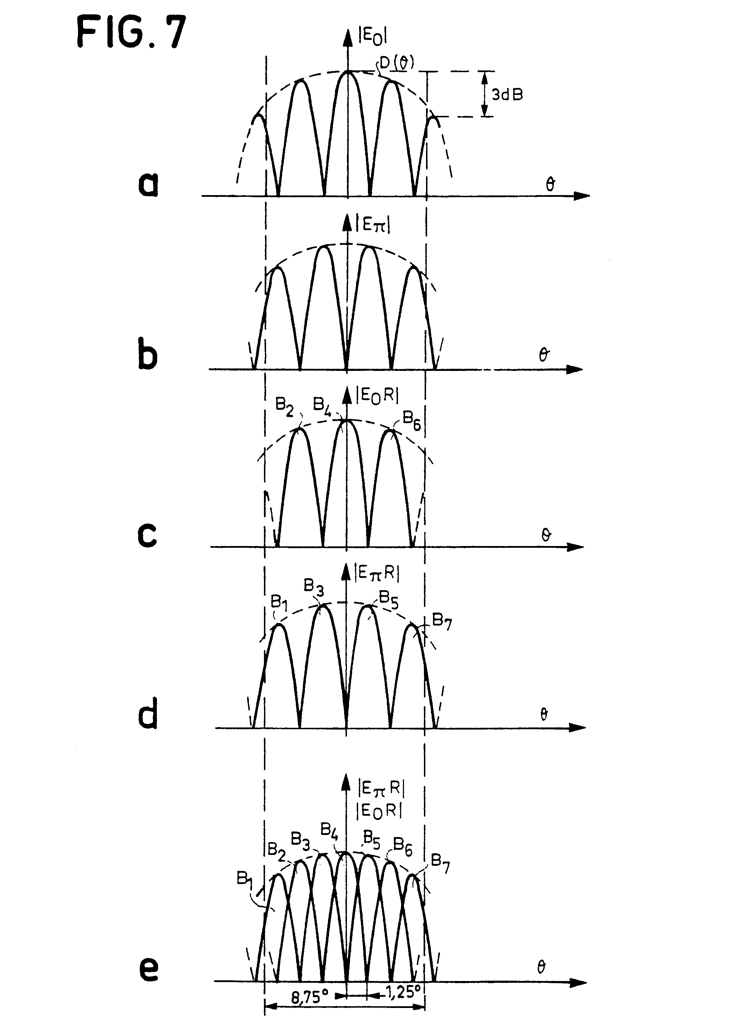

La figure 7 montre les diagrammes ainsi obtenus. Sur la ligne a on a représenté le diagramme d'émission en basse frequence ($E_o$), qui correspond à une interférométrie basse fréquence donnant les lobes cosinusoïdaux suivant la relation (1) de largeur à 3 dB de 1,25° (L = 171) modulé par le diagramme d'émission d'un transducteur (I = 7 $\lambda$) en haute fréquence. Sur la ligne b on représente le diagramme d'emission avec un déphasage de $\pi$ en basse fréquence $E\pi$ entre les deux émissions. Dans ce cas on obtient des lobes sinusoïdaux suivant la relation (4).

Sur la ligne C on montre le diagramme émission-réception ($E_o$R) (déphasage nul) où l'on a représenté des voies paires $B_2$, $B_4$, $B_6$.

Sur la ligne d on a représenté ($E\pi$.R), avec les voies impaires $B_1$, $B_3$, $B_5$, $B_7$ (déphasage $\pi$).

Finalement sur la ligne e on a représenté à la lois les voies paires et impaires, on couvre donc tout le secteur de 8,75° correspondant au diagramme HF, d'émission dun seul transducteur, D($\theta$).

Suivant l'invention on peut obtenir un interféromètre HF qui est combiné avec l'interféromètre BF qui vient d'être décrit, mais il faut un nombre suffisant d'hydrophones de l'antenne de réception HF de manière à rejeter les lobes images au-delà du secteur d'écoute correspondant à une emission.

Avec l'exemple précédent, le secteur d'écoute est égal à 8,75° soit une distance entre récepteurs au plus égale à 6,57$\lambda$ à la fréquence $F_1$ ou $F_2$. Pour obtenir une antenne de réception unique HF et BF, on choisit une distance entre hydrophones égale à 5,83$\lambda$, ce qui donne une antenne comportant 31 hydrophones dont 7 sont utilisés à la fois pour recevoir la BF et HF.

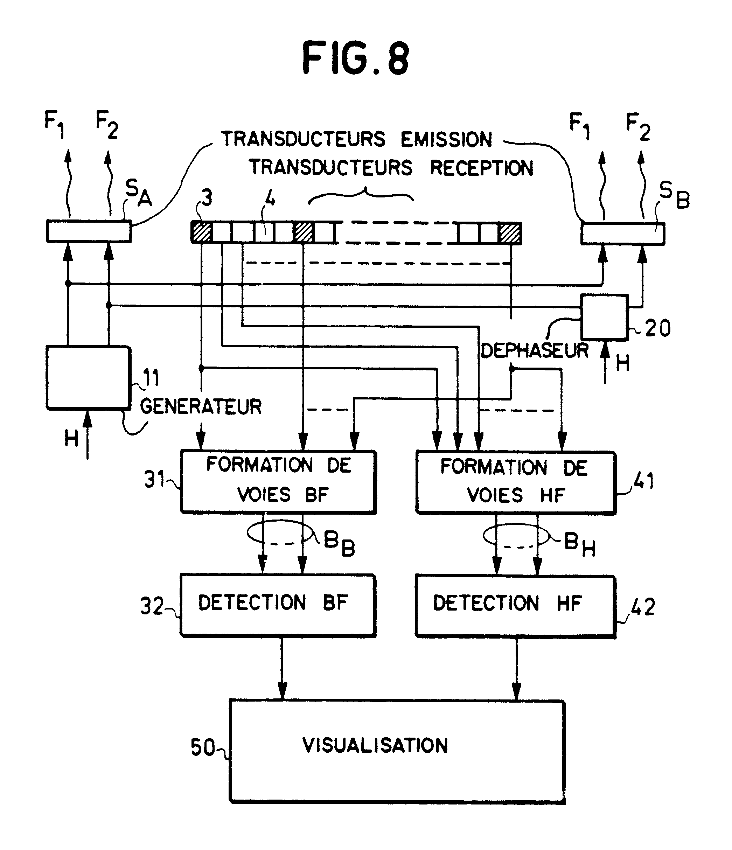

Le système combinant les deux interféromètres BF et HF selon l'invention est représenté sur la figure 8. On retrouve les éléments de l'interféromètre BF, c'est-à-dire principalement les deux sources $S_A$ et $S_B$, l'antenne de réception dont seuls les hydrophones tels que 3, c'est-à-dire 1 sur 5, sont pris en compte dans l'ensemble 31 de formation des voies BF.

L'interféromètre HF comprend les deux sources $S_A$ et $S_B$, l'antenne de réception dont tous les hydrophones, tels que 3 et 4 sont pris en compte dans l'ensemble 41 de la formation des voies HF.

Après détection et multiplexage dans les circuits 32 et 42, les deux ensembles de voies formées HF et BF sont envoyées simultanément dans un ensemble de visualisation 50 du secteur angulaire d'écoute (représentation azimuth-distance). A chaque ensemble est affecté une couleur spécifique permettant de distinguer, pour les comparer, les informations HF et BF. Pour cela un léger décalage angulaire entre les deux est introduit au niveau de la visualisation.

Bien entendu les signaux HF et BF peuvent être visualisés séparément.

**Revendications**

1. Sonar interférométrique en acoustique non-lineaire comprenant une antenne de réception ayant un premier ensemble de transducteurs (3), une antenne d'émission ayant deux transducteurs ($S_A$, $S_B$), placés aux extrémités de l'antenne de réception, un premier dispositif de formation de voies (31) connecté à l'antenne de réception, un premier dispositif de détection (32) connecté au premier dispositif de formation de voie, un dispositif de visualisation (50) connecté au premier dispositif de détection, et des moyens de déphasage (20) pour faire émettre les transducteurs d'émission alternativement en phase et en opposition de phase, les voies formées étant centrées sur les maxima des diagrammes interférométriques, caractérisé en ce qu'il comprend des moyens (11) pour faire émettre les transducteurs d'émission ($S_A$, $S_B$) simultanément sur deux hautes fréquences $F_1$ et $F_2$, que les moyens de déphasage (20) n'agissent que sur l'une de ces deux fréquences, que le premier ensemble de transducteurs de réception (3) est adapté à recevoir les signaux de haute fréquence $F_1$ et $F_2$ et les signaux a la basse fréquence $F_1$-$F_2$ résultant du battement de ces deux hautes fréquences, que le premier dispositif de formation de voies (31) est connecté à ce premier ensemble de transducteurs de réception (3) pour former des voies de réception basse fréquence à partir de ces signaux de réception basse fréquence, que le premier dispositif de détection (31) est relié au premier dispositif de formation de voies (31) pour détecter les informations contenues dans les voies de réception basse fréquence, qu'il comporte en outre un deuxième ensemble de transducteurs de réception (4) placés entre les transducteurs du premier ensemble et adaptés à recevoir les signaux haute fréquence $F_1$ et $F_2$, un deuxième dispositif de formation de voies (41) connecté à tous les transducteurs de réception pour former des voies de réception haute fréquence, et un deuxième dispositif de détection (42) connecté au deuxième dispositif de formation de voies pour détecter les informations contenues dans les voies de réception haute fréquence, et que le dispositif de visualisation (50) est connecté aux premier et deuxième dispositifs de détection et permet de visualiser simultanément les informations contenues dans les voies de réception haute fréquence et basse fréquence.

2. Sonar interférométrique suivant la revendication 1 caractérisé par le fait que la visualisation simultanée en haute et en basse fréquence est obtenue par deux chrominances et un léger décalage angulaire.

## Patentansprüche

1. Interferometrisches Sonargerät für nicht-linearen Akustikbetrieb, mit einer einen ersten Satz von Transduktoren (3) aufweisenden Empfangsantenne, einer Sendeantenne mit zwei an den Enden der Empfangsantenne angebrachten Transduktoren ($S_A$, $S_B$), einer ersten an die Empfangsantenne angeschlossenen Vorrichtung zur Kanalbildung (31), einer ersten an die Vorrichtung zur Kanalbildung angeschlossenen Detektorvorrichtung (32), einer an die erste Detektorvorrichtung angeschlossenen Anzeigevorrichtung (50), und mit Phasenschiebermitteln (20) zur Auslösung des Sendens der Sendetransduktoren in Phase oder Gegenphase, und mit Ausrichtung der gebildeten Kanäle auf die Maxima der interferometrischen Diagramme, dadurch gekennzeichnet, daß das Gerät Mittel (11) aufweist, welche die Sendetransduktoren ($S_A$, $S_B$) gleichzeitig auf zwei hohen Frequenzen $F_1$ und $F_2$ senden lassen, daß die Phasenschiebermittel (20) nur auf einer der beiden Frequenzen arbeiten, daß die erste Gruppe von Empfangstransduktoren (3) sowohl die Hochfrequenzsignale $F_1$ und $F_2$ als auch die aus der Überlagerung dieser beiden Frequenzen resultierenden Signale niederer Frequenzen $F_1$-$F_2$ empfängt, daß die erste Vorrichtung zur Kanalbildung (31) an die erste Gruppe von Empfangstransduktoren (3) zur Bildung der Niederfrequenzempfangskanäle aus den Niederfrequenzempfangssignalen angeschlossen ist, daß die erste Detektorvorrichtung (31) zur Erfassung der in den Niederfrequenzempfangskanälen enthaltenen Informationen an die erste Vorrichtung zur Kanalbildung (31) angeschlossen ist, daß das Gerät weiter eine zweite Gruppe von Empfangsdetektoren (4), welche zwischen den Transduktoren der ersten Gruppe plaziert und zum Empfang der Hochfrequenzsignale $F_1$ und $F_2$ geeignet sind, eine zweite Vorrichtung zur Kanalbildung (4), welche an alle Empfangsdetektoren zur Bildung der Hochfrequenzempfangskanäle angeschlossen ist, und eine zweite Detektorvorrichtung (42) aufweist, welche zur Erfassung der in den Hochfrequenzempfangskanälen enthaltenen Informationen an die zweite Vorrichtung zur Kanalbildung angeschlossen ist, und daß die Anzeigevorrichtung (50) an die erste und zweite Detektorvorrichtung angeschlossen ist und gestattet, gleichzeitig die in den Hoch- und Niederfrequenzempfangskanälen enthaltenen Informationen sichtbar zu machen.

2. Interferometrisches Sonargerät nach Anspruch 1, dadurch gekennzeichnet, daß die gleichzeitige Sichtbarmachung in Hochund Niederfrequenz durch zwei Chrominanzen und eine leichte Winkelversetzung erzielt wird.

## Claims

1. An interferometric sonar apparatus for non-linear acoustic application, comprising a reception antenna having a first assembly of transducers (3), an emission antenna having two transducers ($S_A$, $S_B$) placed at the extremities of the reception antenna, a first channel forming device (31) connected to the reception antenna, a first detection device (32) connected to the first channel forming device, a visualization device (50) connected to the first detection device, and phase shifting means (20) for causing the emission transducers to emit alternatively in phase or antiphase, the formed channels being centered on the maxima of the interferometric diagrams, characterized in that it comprises means (11) for causing the emission transducers ($S_A$, $S_B$) to emit simultaneously via two high frequencies $F_1$ and $F_2$, that the phase shifting means (20) operate only via one of the two frequencies, that the first reception transducer assembly (3) is adapted to receive the high frequency

signals $F_1$ and $F_2$ and the low frequency signals $F_1$-$F_2$ resulting from the interference of the two high frequencies, that the first channel formation device (31) is connected to said first reception transducer assembly (3) for forming the low frequency reception channels out of the low frequency reception signals, that the first detection device (31) is connected to the first channel formation device (31) for detecting the information contained in the low frequency reception channels, that it further ocmprises a second reception trasnducer assembly (4) placed between the transducers of the first assembly and adapted to receive the high frequency signals $F_1$ and $F_2$, a second channel formation device (41) connected to all of the reception transducers for forming the high frequency reception chennels, and a second detection device (42) connected to the second channel formation device for detecting the information contained in the high frequency reception channels, and that the visualization device (50) is connected to the first and second detection devices and permits to visualize simultaneously the information contained in the high and low frequency reception channels.

2. An interferometric sonar apparatus according to claim 1, characterized in that the simultaneous high and low frequency visualization is obtained by the intermediary of two chrominances and a slight angular displacement.

**FIG.1**

$-3dB$

$0,5$

$D(\theta)$

$\dfrac{L}{\lambda} \sin \theta$

$-4 \quad -3 \quad -2 \quad -1 \quad 0 \quad 1 \quad 2 \quad 3 \quad 4$

**FIG.2**

$-3dB$ $\qquad$ $0,88$

$\dfrac{L}{\lambda} \sin \theta$

$-4 \quad -3 \quad -2 \quad -1 \quad 0 \quad 1 \quad 2 \quad 3 \quad 4$

**FIG.3**

$V_{-3}$ $\quad$ $V_{-2}$ $\quad$ $V_{-1}$ $\quad$ $-3dB$ $\quad$ $V_0$ $\quad$ $V_1$ $\quad$ $0,44$ $\quad$ $V_2$ $\quad$ $V_3$

$\dfrac{L}{\lambda} \sin \theta$

$-4 \quad -3 \quad -2 \quad -1 \quad 0 \quad 1 \quad 2 \quad 3 \quad 4$

# FIG.4

# FIG.5

# FIG.6

TRANSDUCTEURS EMISSION
TRANSDUCTEURS RECEPTION

$F_1$  $F_2$

3.1  3.2  3.3  3.i  3.i+1  3.N-1  3.N

$S_A$

$S_B$

10.A

10.B

30.1  30.2  30.3  30.i  30.i+1  30.N-1  30.N

$F_2$

$F_1$

20

H

FORMATION DE VOIES

DEPHASEUR

11

31

GENERATEUR

$B_1$  $B_2$  $B_3$  $B_k$  $B_{k+1}$  $B_{2m-2}$  $B_{2m-1}$

H

DETECTION

32

33

VISUALISATION

# FIG. 7

# FIG.8